# EUROPÄISCHE PATENTSCHRIFT

(11) **EP 1 198 174 B1**
(45) Veröffentlichungstag und Bekanntmachung des Hinweises auf die Patenterteilung: **17.12.2003**
(21) Anmeldenummer: 00948004.7
(22) Anmeldetag: 27.07.2000
(51) Int. Cl.: A01N 59/00, A01N 59/26

(54) **"BIOFILMVERMEIDUNG"**
METHOD FOR PREVENTING THE FORMATION OF BIOLOGICAL FILMS
PROCEDE POUR EVITER LA FORMATION DE FILMS BIOLOGIQUES

(30) Priorität: 06.08.1999 DE 19937300
(43) Veröffentlichungstag der Anmeldung: 24.04.2002
(73) Patentinhaber: Ecolab Inc., St. Paul, MN 55102-1390 (US)
(72) Erfinder: MEYER, Bernhard, D-40822 Mettmann (DE); KRACK, Ralf, D-40237 Düsseldorf (DE); LAUFENBERG, Alfred, D-41541 Dormagen (DE)
(74) Vertreter: Sternagel, Fleischer, Godemeyer & Partner Patentanwälte
(86) Internationale Anmeldenummer: EP0007231
(87) Internationale Veröffentlichungsnummer: WO01010218

(56) Entgegenhaltungen:
- DE-A- 3 828 579
- DATABASE WPI Week 198906 Derwent Publications Ltd., London, GB; AN 1989-043037 XP002150647 & JP 63 315119 A (MATSUSHITA ELEC IND CO LTD), 22. Dezember 1988 (1988-12-22)

## Beschreibung

Die vorliegende Erfindung betrifft die Verwendung von Formulierungen, die man wäßrigen Medien, die über Fittrationseinrichtungen geleitet werden, zusetzt, um durch einen verlangsamten Aufbau von extrazellulären Schichten (Biofilm) auf den Filtrationseinrichtungen oder einem Abbau vorhandener extrazellulärer Schichten das Leistungsvermögen dieser Filtrationseinrichtungen mit der Zeit zu erhöhen.

Es ist grundsätzlich bekannt, daß wäßrige Medien durch Filtration über Filtrationseinrichtungen gereinigt werden können. Beispielsweise können derartige Filtrationseinrichtungen Membrananlagen zur Wasseraufbereitung sein. Derartige Filtrationseinrichtungen dienen dazu, die zu filtrierenden wäßrigen Medien, je nach Anforderung, weitgehend von mineralischen, organischen oder mikrobiologischen Verunreinigungen zu befreien. Derartige Filtratonseinrichtungen sind üblicherweise mehrere Tage, Wochen oder sogar Monate im Betrieb, bevor eine Reinigung oder Überholung der Filtrationseinrichtung erfolgt Je nach Typ der Filtrationseinrichtung und der Art des zu filtrierenden wäßrigen Mediums, beobachtet man im Laufe der Zeit eine Abnahme des Leistungsvermögens dieser Filtrationseinrichtungen. Dies kann sich z.B. dadurch bemerkbar machen, daß der Differenzdruck zwischen Anström- und Abströmseite der Filtrationseinrichtung erhöht wird, was dazu führen kann, daß die in der Filtrationseinrichtung verwendeten Materialien stärker mechanisch belastet werden und in Folge dessen der Materialverschleiß beschleunigt wird. Bei weiterem Betreiben der Filtrationseinrichtung kann es zum Verblocken bis hin zum Stillstand der Filtrationseinrichtung kommen. Das Nachlassen des Leistungsvermögens der Filtrationseinrichtungen ist in der Regel darauf zurückzuführen, daß sich im Laufe der Zeit auf den verwendeten Filtermaterialien eine Schicht extrazellulären Materials bildet. Beispielsweise spricht man im Bereich der Wasseraufbereitung häufig von der Bildung von Biofilmen in Membrananlagen, dem sogenannten Biofouling. Der Aufbau von extrazellulären Schichten hat zur Folge, daß häufige Reinigungs- und Desinfektionsintervalle nötig sind. Dies führt dazu, daß die Filtrationseinrichtung während dieser Stillstandszeiten nicht für die Wasseraufbereitung zur Verfügung steht, was mit Kosten für Unterbrechung des Filtrationsprozesses sowie für die Reinigung verbunden ist. Für den Fall, daß die erforderlichen Reinigungs- und Desinfektionsintervalle nicht eingehalten werden, steigt das Risiko des Ausfalls der Wasserversorgung durch Verblocken sowie das Risiko der mikrobiologischen Verunreinigungen im Permeat, da die extrazellulären Schichten eine Matrix für das Wachstum von Mikroorganismen unter geschützten Bedingungen darstellen können. Andererseits führen zu häufige Reinigungs- und Desinfektionsvorgänge, insbesondere bei Einsatz oxidativer Mittel, zu erhöhtem Verschleiß und damit verbunden, zu verkürzter Lebensdauer der eingesetzten Filtrationsmaterialien.

Die EP-A-0 295 595 beschreibt Formulierungen zur Reinigung oder zur Vermeiden des Faulens von Membranen, welche beispielsweise bei der Umkehrosmose zur Reinigung von Wasser eingesetzt werden. Derartige Formulierungen enthalten neben Phosphorverbindungen, ausgewählt aus Phosphonsäuren, Phosphonaten, Polyphosphorsäuren und deren Salzen, femer schwache organische Säuren und Bifluoride, wie Ammoniumbifluorid oder Natriumbifluorid. Derartige Formulierungen dienen zum Abbau und zur Vermeidung der Bildung von Überzügen (scale). die insbesondere auf Calciumsalzen und Silikaten basieren. Die Formulierungen sind nur wirksam im sauren pH-Bereich, vorzugsweise bei pH-Werten von 2 bis 4.

Gegenstand der EP-A-0 517 102 ist ein Verfahren zur Abtötung von Mikroorganismen und zur Kontrolle des Biofaulens in wäßrigen Systemen, die einen erhöhten Chlorverbrauch aufweisen, insbesondere in Kühlwässem. Hierbei wird dem wäßrigem System ein Gemisch von zwei Komponenten zugesetzt, wobei die eine Komponente ein Oxidationsmittel in Form eines Chlor-Spenders, vorzugsweise Natriumhypochlorit, und die andere Komponente ein Ammoniumsalz, vorzugsweise Ammoniumbromid, darstellt.

Der vorliegenden Erfindung liegt demgegenüber die Aufgabe zugrunde, durch den Zusatz von ausgewählten Formulierungen zu den zu filtrierenden wäßrigen Medien einen verlangsamten Aufbau von extrazellulären Schichten (Biofilm) auf den Filtrationseinrichtungen oder einen Abbau vorhandener extrazellulärer Schichten zu erzielen und so das Leistungsvermögen dieser Filtrationseinrichtungen mit der Zeit zu erhöhen.

Gegenstand der vorliegenden Erfindung ist die Verwendung von Formulierungen, die
a) zumindest eine Verbindung, ausgewählt aus den Gruppen der Ammoniumverbindungen und Phosphatverbindungen, insbesondere aus der Gruppe der primären Orthophosphate mit der allgemeinen Formel M^{I}H₂PO₄ oder M^{II} (H₂PO₄)₂ wobei M^{I} ein Alkalimetall und M^{II} ein Erdalkalimetall darstellt und der Gruppe der sekundären Orthophosphate mit der allgemeinen Formel M^{I}H₂PO₄ oder Gruppe der tertiären Orthophospate mit der allgemeinen Formel M^{I} ₃PO₄ oder M^{II} ₃(PO₄)₂ sowie den davon abgeleiteten kondensierten Phosphaten, den sogenannten Metaphosphaten und Polyphosphaten, enthalten, und
b) die man wäßrigen Medien, die über Filtrationseinrichtungen geleitet werden, zusetzt, um durch einen verlangsamten Aufbau von extrazellulären Schichten (Biofilm) auf den Filtrationseinrichtungen oder einen Abbau vorhandener extrazellulärer Schichten das Leistungsvermögen dieser Filtrationseinrichtungen mit der Zeit zu erhöhen, wobei man
c) bezogen auf 1 Liter des wäßrigen Mediums 0,3 bis 20 mg mindestens eine der unter a) genannten Phosphatverbindungen zusetzt.

Den zu verwendenden Formulierungen wird vorzugsweise, bezogen auf 1 Liter des wäßrigen Mediums, 0,1 bis 8 mg einer Ammoniumverbindung zugesetzt.

in einer bevorzugten Ausführungsform der vorliegenden Erfindung enthalten die Filtrationseinrichtungen zumindest ein Membran-Filterelement mit Porengrößen von 0,0001 bis 1 Mikrometer, insbesondere mit Porengrößen von 0.0001 bis 0,005 Mikrometer, und erreichen Rückhalteraten gegenüber Natriumchlorid von 90 bis zu 99,9 %.

Der Fachmann charakterisiert die verschiedenen Membranfilterelemente in der Regel als Mikro-, Ultra-, Nanofiltratitions- und Umkehrosmosemembranen. Die Charakterisierung der Membranfilterelemente anhand der Porengrößen über den gesamten Bereich von Mikrofiltration bis Umkehrosmose ist nur als orientierende Charakterisierung zu verstehen. So gibt man beispielsweise bei der Verwendung der erfindungsgemäßen Formulierungen zur Erhöhung des Leistungsvermögens der besonders bevorzugten Umkehrosmosemembranen pro Zeit in der Regel keine Porengrößen an, sondern charakterisiert das entsprechende Membranfilterelement anhand der Rückhalteraten gegenüber Natriumchlorid.

Wenn Membranfilterelemente in den Filtrationseinrichtungen eingesetzt werden, enthalten diese bevorzugt zumindest eine Materialkomponente ausgewählt aus den Gruppen der Keramikwerkstoffe und/oder der organischen Polymere, wobei in einer besonders bevorzugten Ausführung das Membranfilterelement zumindest Polyamid und/oder Polypiperazinamid enthält.

In einer bevorzugten Ausführung der vorliegenden Erfindung wird das Leistungsvermögen der Filtrationseinrichtung über die Zeit durch Messen des Differenzdrucks und/oder der Permeatleistung ermittelt, wobei bei Zusatz der erfindungsgemäß zu verwendenden Formulierungen zu den zu filtrierenden wäßrigen Medien der Differenzdruck mit der Zeit weniger stark zunimmt und die Pemteatleistung weniger stark abnimmt, als bei Filtration von wäßrigen Medien, die nicht mit den erfindungsgemäß zu verwendenden Formulierungen versetzt wurden.

In einer weiterhin bevorzugten Ausführung der erfindungsgemäßen Verwendung enthalten die Formulierungen zusätzlich zumindest ein Enzym, wobei das Enzym vorzugsweise ausgewählt ist aus der Gruppe der Hydrolasen und besonders bevorzugt aus der Gruppe der Proteasen stammt.

Bei der erfindungsgemäßen Verwendung wird erreicht, daß der Aufbau von extrazellulären Schichten auf den Filtrationseinrichtungen langsamer stattfindet oder sogar vorhandene extrazelluläre Schichten abgebaut werden. Da sich in derartigen Schichten Mikroorganismen verstecken und ungestört vermehren können, entspricht es einer besonders bevorzugten Ausführung der erfindungsgemäß verwendeten Formulierung, wenn zusätzlich mindestens eine biozide Komponente ausgewählt aus den Gruppen der Alkohole, Aldehyde, antimikrobiellen Säuren, Carbonsäureester, Säureamide, Phenole, Phenolderivate, Diphenyle, Diphenylalkane, Harnstoffderivate, Sauerstoff-, Stickstoff-Acetale sowie -Formale, Benzamidine, Isothiazoline, Phthalimidderivate, Pyridinderivate, antimikrobiellen oberflächenaktiven Verbindungen, Guanidine, antimikrobiellen amphoteren Verbindungen, Chinoline, 1,2-Dibrom-2,4-dicyanobutan, lodo-2-propynyl-butyl-carbamat, lod, lodophore, Peroxide enthalten ist, wobei es ganz besonders bevorzugt ist, wenn als antimikrobielle Komponenten ein oder mehrere Verbindungen ausgewählt aus Ethanol, n-Propanol, i-Propanol, 1,3-Butandiol, Phenoxyethanol, 1,2-Propylenglykol, Glycerin, Undecylensäure, Zitronensäure, 2-Benzyl-4-chlorphenol, 2,2'-Methylen-bis-(6-brom-4-chlorphenol), 2,4,4'-Trichlor-2'-hydroxydiphenylether, N-(4-Chlorphenyl)-N-(3,4-dichlorphenyl)-harnstoff, N,N'-(1,10-decandiyldi-1-pyridinyl-4-yliden)-bis-(1-octanamin)-dihydrochlorid, N ,N' -Bis-( 4-Chlorphenyl)-3, 12-diimino-2,4,11,13-tetraaza-tetradecandiimidamid, quaternären Ammoniumverbindungen oder Alkyl-Aminen, Guanidinen, Amphoteren enthalten sind.

In einer bevorzugten Verwendung werden die Formulierungen proportional dem Wasserstrom des wäßrigen Mediums zugesetzt. In einer weiterhin bevorzugten Verwendung wird die Menge der dem wäßrigen Medium zugesetzten Formulierungen über Leitfähigkeit gemessen, wobei in einer besonders bevorzugten Ausführung die dem wäßrigen Medium zugesetzten Mengen über Leitfähigkeit gemessen und gesteuert werden. Bei der erfindungsgemäßen Verwendung befindet sich zwischen Dosierort und Filtrationseinrichtung vorzugsweise ein Mischaggregat.

In einer bevorzugten Ausführungsform der erfindungsgemäßen Verwendung liegen die Formulierungen in einer Darreichungsform ausgewählt aus wäßriger Lösung, Gel, Emulsion, Paste, Dispersion, Pulver, Granulat, Schuppen, Perlen, Tabletten, blockartige Formkörper, Extrudat vor, wobei es besondes bevorzugt ist, wenn die verwendeten Formulierungen aus einer nicht wäßrigen Darreichungsform und einer wasserlöslichen Hülle, die vorzugsweise auf Polyvinylalkohol basiert, bestehen, und wenn ganz besonders bevorzugt die wasserlösliche Hülle einen Teil der Fomlutierungsbestandteile enthält

In der erfindungsgemäßen Verwendung können, wie beschrieben, Formulierungen eingesetzt werden, die Ammoniumverbindungen enthalten. Wenn Ammoniumverbindungen zum Einsatz kommen, dann vorzugsweise Ammoniumverbindungen ausgewählt aus Ammoniumacetat, Ammoniumalaun, Ammoniumcarbonat, Ammoniumchlorid, Ammoniumdihydrogenphosphat, Ammoniummagnesiumphosphat, Ammoniumnitrat, Ammoniumphosphat, Ammoniumsulfat und Ammonsulfatsalpeter.

In einer ganz besonders bevorzugten Ausführung enthalten die erfindungsgemäß verwendeten Formulierungen zusätzlich mindestens eine Komponente ausgewählt aus organischen Kohlenstoffverbindungen, vorzugsweise Kohlenhydraten, Lipiden, Proteinen oder Kohlenwasserstoffen und den Gruppen der Fettsäuren, Aminosäuren, Alkohole und sonstigen Carbonsäuren. In ganz speziellen Fällen enthalten die erfindungsgemäß verwendeten Formulierungen zusätzlich mindestens ein Spurenelement ausgewählt aus der Gruppe der Schwefelverbindungen und der Mineralstoffe, wie beispielsweise Eisen-, Kalzium-, Kalium-, Magnesium-, Mangan-, Zinkverbindungen und der Spurenelemente, wie beispielsweise Nickel-, Kobalt-, Zinn-, Kupfer-, Aluminium-, Jodid-, Bromid-, Borat-, Molybdatverbindungen.

### Beispiele

### Versuchsbeschreibung:

Im großtechnischen Versuch wurde Wasser von definierter Qualität zu zwei parallel geschalteten 2,5 Zoll Umkehrosmosemembranen bei einem konstanten Druck von 9 bar geleitet. Die Wasseranalyse des verwendeten Wassers ist in Tabelle 1 enthalten.

**Tabelle 1:**

| Wasserqualität des in dem Beispielversuch verwendeten, wäßrigen Mediums | | |
|---|---|---|
| Parameter | Einheit | Durchschnittswert |
| m-Wert | mmol/L | 3,00 |
| pH-Wert | | 7,9 |
| Härte | ° dH | 25,9 |
| Ca-Gehalt | mg/L | 136 |
| Mg-Gehalt | mg/L | 30,4 |
| CI-Gehalt | mg/L | 186 |
| SO₄²⁻Gehalt | mg/L | 255 |
| SiO₂-Gehalt (ortho) | mg/L | 7,2 |
| P₂O₃-Gehalt | mg/L | 0,37 |
| NH₄⁺-Gehalt | mg/L | 0,08 |
| Fe_{ges}-Gehalt | mg/L | 0,17 |
| NO₂-Gehalt | mg/L | 0,09 |
| NO₃-Gehaft | mg/L | 28,1 |
| TOC-Wert | mg/L | 3,9 |
| Trübe | TE/F | 5,7 |
| Leitfähigkeit (bei 25 °C) | µS/cm | 1390 |
| Feststoffe | mg/L | 4,0 |
| m-Wert: beschreibt die Menge an Salzsäure, die erforderlich ist, um Wasser sauer zu stellen und charakterisiert die Pufferkapazität des Wassers | | |

In die erste Membran wurde das Wasser kontinuierlich entsprechend der Qualität, wie sie in Tabelle 1 dargelegt ist, bei konstantem Druck von 9 bar ohne Zusatzstoffe über einen Zeitraum von 30 Tagen eingespeist Kurz vor der zweiten Membran erfolgte die Dosierung einer Formulierung, in der Weise, daß dem Wasser kontinuierlich 3 mg/L Ammoniumchlorid und 6 mg/L Katiumhydrogenphosphat zugesetzt wurden. Während eines kontinuierlichen Betriebs über 30 Tage wurde der Differenzdruck als Differenz zwischen Eingangsdruck und Ausgangsdruck für beide Membranen ermittelt. Gleichzeitig wurde die Menge an erhaltenem Permeat in Liter pro Stunde festgehalten. Die Ergebnisse dieser Langzeituntersuchung sind in Tabelle 2 enthalten und verdeutlichen, daß bei Zusatz der erfindungsgemäß verwendeten Formulierungen eine Verbesserung des Leistungsvermögens der Umkehrosmosemembranen erreicht wird. Dies wird um so deutlicher je länger die Filtrationseinrichtungen ohne Unterbrechung, d.h. ohne Reinigung und Desinfektion, gefahren werden. So kommt es im Vergleichsbeispiel, also ohne Zusatz einer erfindungsgemäß zu verwendenden Formulierung nach 30 Tagen zum Abbruch aufgrund Verblockens der Membranen. Zu diesem Zeitpunkt liegt der Differenzdruck bei 2 bar und die Permeatleistung liegt bei nur 35 Liter pro Stunde. Im gleichen Zeitraum beobachtet man für das efindungsgemäße Beispiel einen Differenzdruck von 1,20 bar und eine Permeatleistung von 48 Citer pro Stunde.

**Tabelle 2:**

| Leistungsvermögen einer Umkehrosmosemembran zur Filtration wäßriger Lösungen ausgedrückt in Form des Differenzdruckes und der Permeatleistung in Abhängigkeit von der Zeit und der Zugabe einer Zusatzformulierung | | | | |
|---|---|---|---|---|
| Tage | Vergleichsbeispiel | | Erfindungsgemäßes Beispiel | |
| | Differenzdruck [Bar] | Permeat in L/h | Differenzdruck [Bar] | Permeat in L/h |
| 0 | 0,68 | 52 | 0,67 | 57 |
| 1 | 0,72 | 51 | 0,67 | 56 |
| 7 | 0,59 | 47 | 0,55 | 54 |
| 10 | 0,64 | 46 | 0,74 | 53 |
| 15 | 0,79 | 42 | 0,76 | 52 |
| 20 | 1,07 | 43 | 0,70 | 53 |
| 25 | 1,38 | 36 | 1,08 | 50 |
| 30 | 2,00 Abbruch | 35 | 1,20 | 48 |

## Patentansprüche

1. Verwendung von Formulierungen, die
a) zumindest eine Verbindung, ausgewählt aus den Gruppen der Ammoniumverbindungen und Phosphatverbindungen, insbesondere aus der Gruppe der primären Orthophosphate mit der allgemeinen Formel M^{I}H₂PO₄ oder M^{II}(H₂PO₄)₂ wobei M^{II} ein Alkalimetall und M^{II} ein Erdalkalimetall darstellt und der Gruppe der sekundären Orthophosphate mit der allgemeinen Formel M^{I} H₂PO₄ oder Gruppe der tertiären Orthophospate mit der allgemeinen Formel M^{I} ₃PO₄ oder M^{II} ₃(PO₄)₂ sowie den davon abgeleiteten kondensierten Phosphaten, den sogenannten Metaphosphaten und Polyphosphaten, enthalten, und
b) die man wäßrigen Medien, die über Filtrationseinrichtungen geleitet werden, zusetzt, um durch einen verlangsamten Aufbau von extrazellulären Schichten (Biofilm) auf den Filtrationseinrichtungen oder einen Abbau vorhandener extrazellulärer Schichten das Leistungsvermögen dieser Filtrationseinrichtungen mit der Zeit zu erhöhen, wobei man
c) bezogen auf 1 Liter des wäßrigen Mediums 0,3 bis 20 mg mindestens eine der unter a) genannten Phosphatverbindungen zusetzt.

2. Verwendung von Formulierungen nach Anspruch 1, **dadurch gekennzeichnet, daß** man, bezogen auf 1 Liter des wäßrigen Mediums, 0,1 bis 8 mg einer Ammoniumverbindung zusetzt.

3. Verwendung von Formulierungen nach Anspruch 1 oder 2, **dadurch gekennzeichnet, daß** die Formulierungen zusätzlich zumindest eine Enzymverbindung enthalten.

4. Verwendung von Formulierungen nach einem der Ansprüche 1 bis 3, **dadurch gekennzeichnet, daß** die Formulierungen in einer Darreichungsform ausgewählt aus wäßriger Lösung, Gel, Emulsion, Paste, Dispersion, Pulver, Granulat, Schuppen, Perlen, Tabletten, blockartige Formkörper, Extrudat vorliegen.

5. Verwendung von Formulierungen nach einem der Ansprüche 1 bis 4, **dadurch gekennzeichnet, daß** sie aus einer nicht wäßrigen Darreichungsform und einer wasserlöslichen Hülle, vorzugsweise auf Basis Polyvinylalkohol, bestehen, und besonders bevorzugt die wasserlösliche Hülle zusätzliche Formulierurigsbestandteile enthält.

6. Verwendung von Formulierungen nach einem der Ansprüche 1 bis 5, **dadurch gekennzeichnet, daß** die Formulierungen zusätzlich mindestens eine biozide Komponente, ausgewählt aus den Gruppen der Alkohole, , Aldehyde, antimikrobiellen Säuren, Carbonsäureester, Säureamide, Phenole, Phenolderivate, Diphenyle, Diphenylalkane, Hamstoffderivate, Sauerstoff-, Stickstoff-Acetate sowie Formale, Benzamidine, Isothiazoline, Phthalimidderivate, Pyridinderivate, antimikrobiellen oberflächenaktiven Verbindungen, Guanidine, antimikrobiellen amphoteren Verbindungen, Chinoline, 1,2-Dibrom-2,4-dicyanobutan, lodo-2-propynyl-butyl-carbamat, lod, lodophore, Peroxide, enthalten.

7. Verwendung von Formulierungen nach Anspruch 6, **dadurch gekennzeichnet, daß** sie als antimiktrobielle Komponenten eine oder mehrere Verbindungen ausgewählt aus Ethanol, n-Propanol, i-Propanol, 1,3-Butandiol, Phenoxyethanol, 1,2-Propylenglykol, Glycerin, Undecylensäure, Zitronensäure, 2-Benzyl-4-chlorphenol, 2,2'-Methylen-bis(6-brom-4-chlorphenol), 2,4,4'-Trichtor 2'-hydroxydiphenytether, N-(4-Chlorphenyl)-N-(3,4-dichlorphenyl)-harnstoff, N,N'-(1,10-decandiyldi-1-pyridinyl-4-yliden)-bis-(1-octanamin)-dihydrochlorid), N,N'-Bis-(4-Chlorphenyl)-3,12-diimino-2,4,11,13-tetraazatetradecandiimidamid, quaternären Ammoniumverbindungen oder AlkylAminen, Guanidinen, Amphoteren, enthalten.

8. Verwendung von Formulierungen nach einem der Ansprüche 1 bis 7, **dadurch gekennzeichnet, daß** die Formulierungen proportional dem Wasserstrom des wärßigen Mediums zugesetzt werden.

9. Verwendung von Formulierungen nach einem der Ansprüche 1 bis 8, **dadurch gekennzeichnet, daß** die Menge, die dem wäßrigen Medium zugesetzt wird, über Leitfähigkeit gemessen wird.

10. Verwendung nach Anspruch 9, **dadurch gekennzeichnet, daß** die Menge, die dem wäßrigen Medium zugesetzt wird, über Leitfähigkeit gemessen und gesteuert wird.

11. Verwendung von Formulierungen nach einem der Ansprüche 1 bis 10, **dadurch gekennzeichnet, daß** sich zwischen Dosierort und Filtrationseinrichtung ein Mischaggregat befindet

12. Verwendung von Formulierungen nach einem der Ansprüche 1 bis 11, **dadurch gekennzeichnet, daß** die Filtrationseinrichtung zumindest ein Membranfilterelement mit Porengröße von 0,0001 bis 1 Mikrometer enthält.

13. Verwendung von Formulierungen nach einem der Ansprüche 1 bis 12, **dadurch gekennzeichnet, daß** das Leistungsvermögen der Filtrationseinrichtung durch Messen des Differenzdrucks und/oder der Permeatleistung ermittelt wird.

## Claims

1. Use of formulations which
a) include at least one compound selected from the groups of ammonium compounds and phosphate compounds, particularly from the group of primary orthophosphates of general formula M^{I}H₂PO₄ or M^{II}(H₂PO₄)₂ wherein M^{I} represents an alkali metal and M^{II} represents an alkaline earth metal, and from the group of secondary orthophosphates of general formula M^{I}H₂PO₄, or from the group of tertiary orthophosphates of general formula M^{I} ₃PO₄ or M^{II} ₃(PO₄)₂, as well as from condensed phosphates derived therefrom, i.e., so-called metaphosphates and polyphosphates, and
b) are added to aqueous media, said media being passed over filtration means, in order to increase the functional capacity of said filtration means with time, said increase being effected by slower formation of extracellular layers (biofilm) on the filtration means, or by degradation of existing extracellular layers, with
c) 0.3 to 20 mg of at least one of the phosphate compounds mentioned under a) being added per 1 liter of aqueous medium.

2. The use of formulations according to claim 1, **characterized in that** 0.1 to 8 mg of an ammonium compound is added per 1 liter of aqueous medium.

3. The use of formulations according to claim 1 or 2, **characterized in that** the formulations additionally include at least one enzyme compound.

4. The use of formulations according to any of claims 1 to 3, **characterized in that** the formulations are supplied in a form selected from aqueous solution, gel, emulsion, paste, dispersion, powder, granulate, flakes, beads, tablets, block-like moldings, and extrudate.

5. The use of formulations according to any of claims 1 to 4, **characterized in that** the formulations are comprised of a non-aqueous form of supply and a water-soluble envelope preferably based on polyvinyl alcohol, and in a particularly preferred fashion, the water-soluble envelope includes, additional formulation components.

6. The use of formulations according to any of claims 1 to 5, **characterized in that** the formulations additionally include at least one biocidal component selected from the groups of alcohols, aldehydes, antimicrobial acids, carboxylic esters, amides, phenols, phenol derivatives, diphenyls, diphenylalkanes, urea derivatives, oxygen and nitrogen acetals and formals, benzamidines, isothiazolines, phthalimide derivatives, pyridine derivatives, antimicrobial surface-active compounds, guanidines, antimicrobial amphoteric compounds, quinolines, 1,2-dibromo-2,4-dicyanobutane, iodo-2-propynylbutyl carbamate, iodine, iodophors, and peroxides.

7. The use of formulations according to claim 6, **characterized in that** the formulations include one or more compounds selected from ethanol, n-propanol, isopropanol, 1,3-butanediol, phenoxyethanol, 1,2-propylene glycol, glycerol, undecylenic acid , citric acid, 2-benzyl-4-chlorophenol, 2,2'-methylene-bis(6-bromo-4-chlorophenol), 2,4,4'-trichloro-2'-hydroxydiphenyl ether, N-(4-chlorophenyl)-N-(3,4-dichlorophenyl)urea,-N,N'-(1,10-decanediyldi-1-pyridinyl-4-ylidene)-bis(1-octaneamine)-dihydrochloride, N,N'-bis-(4-chloropheny)-3,12-diimino-2,4,11,13-tetraazatetradecane diimide amide, quaternary ammonium compounds, or alkylamines, guanidines, and amphoteric substances as antimicrobial components.

8. The use of formulations according to any of claims 1 to 7, **characterized in that** the formulations are added proportionally to the stream of water of the aqueous medium.

9. The use of formulations according to any of claims 1 to 8, **characterized in that** the amount added to the aqueous medium is measured via conductivity.

10. The use according to claim 9, **characterized in that** the amount added to the aqueous medium is measured and controlled via conductivity.

11. The use of formulations according to any of claims 1 to 10, **characterized in that**,a mixing unit is situated between the site of metering and the filtration means.

12. The use of formulations according to any of claims 1 to 11; **characterized in that** the filtration means includes at least one membrane filter element having a pore size of from 0.0001 to 1 µm.

13. The use of formulations according to any of claims 1 to 12, **characterized in that** the functional capacity of the filtration means is determined by measuring the differential pressure and/or permeate capacity.

## Revendications

1. Utilisation de compositions qui
(a) comprennent au moins un composé sélectionné à partir des groupes des composés d'ammonium et des composés de phosphate notamment à partir des groupes de l'orthophosphate primaire comprenant la formule générale M^{I}H₂PO₄ ou M^{II}(H₂PO₄)₂ où M^{I} est un métal alcalin et M^{II} représente un métal ferreux alcalin et à partir du groupe des orthophosphates secondaires comprenant la formule générale M^{I}H₂PO₄ ou le groupe des orthophosphates tertiaires comprenant la formule générale M^{I} ₃PO₄ ou M^{II} ₃(PO₄)₂ ainsi que les phosphates condensés dérivés de ceux-ci, lesdits métaphosphates et les polyphosphates et
(b) que l'on utilise dans des milieux aqueux qui sont dirigés par des systèmes de filtration en vue d'augmenter les performances des dispositifs de filtration avec le temps au moyen d'une structure ralentie des couches extra-cellulaires (Biofilm) sur les dispositifs de filtration ou une construction de couche extra-cellulaire existante ou
(c) on ajoute 0,3 à 20 mg au moins d'un des composants phosphate cités sous a) en référence à un litre de milieux aqueux.

2. Utilisation des compositions selon la revendication 1, **caractérisée en ce qu'**on ajoute 0,1 à 8 mg d'un composé d'ammonium pour un litre de milieu aqueux.

3. Utilisation des compositions selon la revendication 1 ou 2, **caractérisée en ce que** les formulations comprennent en plus au moins un composé enzymatique.

4. Utilisation des compositions selon l'une quelconque des revendications 1 à 3, **caractérisée en ce que** les compositions existent sous une forme de présentation choisie parmi une solution aqueuse, un gel, une émulsion, une pâte, une dispersion, une poudre, des granulés, des pellicules, des perles, des comprimés, des éléments de forme du type bloc ou un extrudat.

5. Utilisation des compositions selon l'une quelconque des revendications 1 à 4, **caractérisée en ce qu'**elles se composent d'une forme de représentation non-aqueuse et d'une enveloppe soluble dans l'eau de préférence sur la base d'alcool polyvinylique et particulièrement préférées **en ce qu'**elles intègrent l'enveloppe aqueuse comme élément constituant de la formulation.

6. Utilisation des compositions selon l'une quelconque des revendications 1 à 5, **caractérisée en ce que** la composition contient par ailleurs au moins un composant biozide choisi parmi le groupe des alcools, des aldéhydes, des acides antimicrobiens, des esters d'acide carbonique, des amides acides, des phénols, des dérivés de phénol, des diphényles, des alcanes de diphényle, des dérivés d'urée, de l'oxygène-azote-acétate comme les formals, des benzamidines, des isothiazolines, des dérivés phthalimides, des dérivés pyridines, des composés à surface active antimicrobiens, de la guanidine, des composés amphotères antimicrobiens, de la quinoline, du 1,2-dibrome-2,4-dicyanobutane de l'iodo-2-propynyl-butylcarbamate, de l'iode, de l'iodophore, et du péroxyde.

7. utilisation des compositions selon la revendication 6, **caractérisée en ce qu'**elles comprennent comme composants antimicrobiens un ou plusieurs composés sélectionnés parmi l'éthanol, le n-propanol, le i-propanol, le 1,3-butandoil, le phénoxyéthanol, le 1,2 propylène glycol, la glycérine, l'acide undécilène, l'acide citrique, le 2-benzyl-4-chlorophénol, le 2,2'-méthylène-bis(6-brome-4-chlorophénol), l'éther de 2,4,4'-trichloro-2'-hydroxydiphényle, le N-(4-chlorophényl)-N-(3,4-dichlorophényl)-urée, le N,N'-(1,10-décandiyldi-1-pyridinyl-4-ylidène)-bis-(1-octanamin)-dihydrochlorure), le N,N'-bis-(4-chlorophényl)-3,12-diimino-2,4,11,13-tétraaza-tétradécandiimidamide des composés d'ammonium quaternaire ou des amines alkyles, des guanidines, des amphotères.

8. Utilisation des compositions selon l'une quelconque des revendications 1 à 7, **caractérisée en ce que** les compositions sont ajoutées de façon proportionnelle à un débit d'eau du milieu aqueux.

9. Utilisation des compositions selon l'une quelconque des revendications de 1 à 8, **caractérisée en ce que** la quantité qui est ajoutée au milieu aqueux est mesurée en termes de conductivité.

10. Utilisation selon la revendication 9, **caractérisée en ce que** la quantité qui est ajoutée au milieu aqueux est mesurée en termes de conductivité et est contrôlée.

11. Utilisation des compositions selon l'une quelconque des revendications 1 à la, **caractérisée en ce qu'**un agrégat mixte se trouve entre le lieu de dosage et le dispositif de filtration.

12. Utilisation des compositions selon l'une quelconque des revendications de 1 à 11, **caractérisée en ce que** le dispositif de filtration contient au moins un élément de filtre à membrane présentant une taille de pore de 0,0001 à 1 micromètre.

13. Utilisation des formulations selon l'une des revendications 1 à 12, **caractérisée en ce que** la performance du dispositif de filtration est déterminée par la mesure des pressions différentielles et / ou des performances de perméation.
